# EUROPEAN PATENT APPLICATION

(11) **EP 2 787 748 A1**
(43) Date of publication of application: **08.10.2014**
(21) Application number: 13809709.2
(22) Date of filing: 28.05.2013
(51) Int. Cl.: H04W 4/00

(54) **PROMPT METHOD, TERMINAL, CLOUD SERVER, AND SYSTEM**

(30) Priority: 25.06.2012 CN 201210212061
(71) Applicant: Huawei Device Co., Ltd., Longgang District Shenzhen Guangdong 518129 (CN)
(72) Inventor: YI, Qiang, Shenzhen Guangdong 518129 (CN)
(74) Representative: Goddar, Heinz J.
(86) International application number: PCT/CN2013/076302
(87) International publication number: WO 2014/000546

(57) **Abstract**

Embodiments of the present invention disclose a reminding method, a terminal, a cloud server, and a system, relating to the field of mobile communications technologies, and capable of displaying reminder content to a user at proper time when the user is uncertain about a reminding time or reminding place, thereby improving user experience. The reminding method of a terminal includes: extracting, by a terminal, a keyword of reminder content input by a user; monitoring and parsing, by the terminal, received real-time content; and if the real-time content includes the keyword, displaying, by the terminal, the reminder content that includes the keyword.

## Description

### CROSS-REFERENCE TO RELATED APPLICATION

This application claims priority to Chinese Patent Application No. 201210212061.5, filed with the Chinese Patent Office on June 25, 2012, which is incorporated herein by reference in its entirety.

### TECHNICAL FIELD

The present invention relates to the field of mobile communications technologies, and in particular, to a reminding method, a terminal, a cloud server, and a system.

### BACKGROUND

Reminding functions such as an alarm clock and a schedule generally exist in almost all mobile terminals such as a mobile phone or a personal digital assistant currently. For example, a user may set reminder content that includes reminding time in a terminal beforehand, and, when the set reminding time arrives, the terminal displays the reminder content preset by the user to the user.

In addition, the user may set reminder content that includes a reminding place in a mobile terminal such as a mobile phone or a personal digital assistant that has a global positioning system, and, when the user approaches the reminding place, the global positioning system of the mobile terminal detects that the user is located in the reminding place in the reminder content and displays the reminder content preset by the user to the user.

In the process of implementing the present invention, the inventor finds that the mobile terminal can only display reminder information to the user according to the reminding time or reminding place set by the user, and therefore, when the user is uncertain about the reminding time or reminding place, the reminding function of the mobile terminal cannot satisfy user experience, which deteriorates the user experience.

### SUMMARY

A technical issue that the present invention intends to solve is to provide a reminding method, a terminal, a cloud server, and a system, which can display reminder content to a user when the user is uncertain about a reminding time and a reminding place of the reminder content, so as to improve user experience.

To solve the foregoing technical issue, the present invention adopts the following technical solution:
A reminding method of a terminal includes:
   extracting, by the terminal, a keyword of reminder content input by a user;
   monitoring and parsing, by the terminal, received real-time content; and
   if the real-time content includes the keyword, displaying, by the terminal, the reminder content that includes the keyword.
A terminal includes:
   a terminal extracting unit, configured to extract a keyword of reminder content input by a user;
   a terminal parsing unit, configured to monitor and parse received real-time content; and
   a terminal displaying unit, configured for the terminal to display the reminder content that includes the keyword if the real-time content includes the keyword.

In the technical solution of this embodiment, the terminal extracts a keyword of reminder content input by the user, and monitors and parses received real-time content. If the real-time content includes the keyword, the terminal displays the reminder content that includes the keyword. When the user is uncertain about the reminding time or reminding place of specific reminder content, the terminal can determine whether to display the reminder content to the user, where the determining is performed according to whether the real-time content received by the terminal includes the keyword of specific reminder content. This method can provide the user with a reminding manner that is not necessarily based on a specific reminding time or place, thereby improving user experience.

To solve the foregoing technical issue, the present invention further adopts the following technical solution:
A reminding method of a cloud server includes:
   receiving, by the cloud server, reminder information from a terminal, where the reminder information includes reminder content and/or a keyword of the reminder content and an identifier of the reminder content;
   subscribing, by the cloud server, to information related to the reminder information from a service application and/or a website according to the reminder information;
   receiving, by the cloud server, the information related to the reminder information from the service application and/or the website; and
   sending, by the cloud server, the information related to the reminder information to the terminal.
A cloud server includes:
   a cloud server obtaining unit, configured to receive reminder information from a terminal, where the reminder information includes reminder content and/or a keyword of the reminder content and an identifier of the reminder content;
   a cloud server subscribing unit, configured to subscribe to information related to the reminder information from a service application and/or a website according to the reminder information;
   a cloud server receiving unit, configured to receive the information related to the reminder information from the service application and/or the website; and
   a cloud server sending unit, configured to send the information related to the reminder information to the terminal.

In the technical solution of the embodiment of the present invention, after the cloud server receives reminder information sent by the terminal, the cloud server searches for a service application and/or a website according to the reminder information, and subscribes to information of the service application and/or website. After the cloud server receives information related to the reminder information from the service application and/or the website, the cloud server sends the reminder information and the information related to the reminder information to the terminal, and the terminal displays the information related to the reminder information and the reminder content corresponding to the reminder content to the user. The reminding method of a cloud server can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

To solve the foregoing technical issue, the present invention further adopts the following technical solution:
A reminding method of a terminal includes:
   sending, by the terminal, a reminder message to a cloud server;
   receiving, by the terminal, the reminder message and information related to the reminder information that are fed back by the cloud server; and
   displaying, by the terminal, the reminder information and the information related to the reminder information.
A terminal includes:
   a terminal sending unit, configured to send a reminder message to a cloud server;
   a terminal receiving unit, configured to receive information related to the reminder information that is fed back by the cloud server; and
   a terminal displaying unit, configured to display the information and the reminder information.

In the technical solution of the embodiment of the present invention, the terminal sends reminder information to the cloud server, and receives and displays the reminder information and information related to the reminder information that are returned by the cloud server. The reminding method of a terminal can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a reminding method of a terminal according to an embodiment of the present invention;
FIG. 2 is a schematic structural diagram of a terminal according to an embodiment of the present invention;
FIG. 3 is a schematic structural diagram of a terminal parsing unit according to an embodiment of the present invention;
FIG. 4 is a flowchart of a reminding method of a cloud server according to an embodiment of the present invention;
FIG. 5 is a second flowchart of a reminding method of a terminal according to an embodiment of the present invention;
FIG. 6 is a schematic structural diagram of a cloud server according to an embodiment of the present invention;
FIG. 7 is a schematic structural diagram of a cloud server subscribing unit according to an embodiment of the present invention; and
FIG. 8 is a second schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

### Embodiment 1

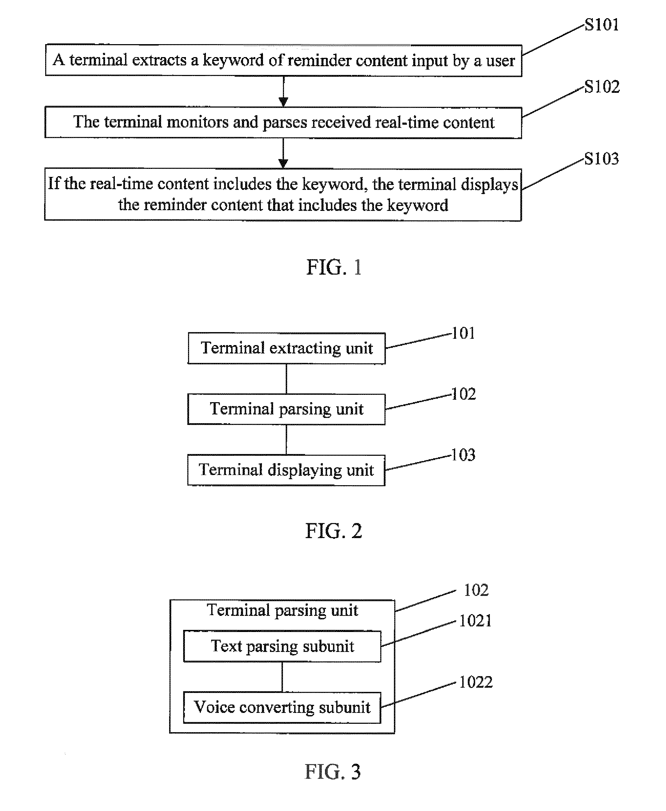

The embodiment of the present invention provides a reminding method of a terminal. As shown in FIG. 1, the reminding method of a terminal includes:
Step S101: The terminal extracts a keyword of reminder content input by a user.

The user may input the reminder content by using a man-machine interaction platform provided by the terminal such as a calendar or a Notepad, and the terminal extracts the keyword of the reminder content input by the user.

When the terminal extracts a keyword in the reminder content, a noun in the reminder content may be extracted as the keyword first. For example, if the reminder content received at this time is "Buy and give a birthday gift to Xiao Li", the terminal may detect that nouns included in the reminder content are "Xiao Li" and "Birthday Gift". Therefore, the terminal may store "Xiao Li" and "Birthday Gift" as keywords of the reminder content. Further, optionally, the terminal may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the terminal may extract at least two keywords "Xiao Li" and "Birthday gift".

Optionally, the terminal may further remove an attribute of a compound noun. For example, the attribute of "birthday gift" is "birthday", and therefore, the terminal may remove "birthday" in "birthday gift". In this case, the keywords extracted by the terminal are at least "Xiao Li" and "gift".

Further, the keyword may further include a time or a place included in the reminder content. In this way, the terminal may comprehensively extract important information included in the user's reminder content, and use the important information as keywords. Optionally, when real-time content of one more input by the user includes a time or a place and the time or place included in the real-time content matches the time or place serving as a keyword, the terminal displays the reminder content that includes the time or place.

It should be noted that multiple pieces of reminder content generally coexist in the terminal, and therefore, to facilitate distinguishing of each piece of reminder content, an identifier is generally set for each piece of reminder content. Generally, the terminal may set the identifier according to the time sequence of inputting the reminder content.

Step S102: The terminal monitors and parses received real-time content.

Generally, the real-time content received by the terminal includes text content and/or voice content. Specifically, the real-time content received by the terminal may be text content or voice content that is input by the user into the terminal, for example, a text input when the user uses an application that needs to invoke word input such as a short message, a Notepad, a browser, an e-mail, or an instant messenger, or a voice input when the user uses an application such as a phone, a recorder, or an instant messenger; or may be text content or voice content in parsed Internet content from a browser; or may be voice content in multimedia such as incoming calls, voices, or videos of the terminal. The real-time content may also be in another form such as image content, but the present invention is not limited thereto.

Step S103: If the real-time content includes the keyword, the terminal displays the reminder content that includes the keyword.

One piece of real-time content generally includes more than one keyword. When the terminal parses the real-time content, once a keyword is obtained by parsing, the terminal stores the keyword temporarily, and goes on parsing the real-time content. After the real-time content is parsed completely, the reminder content corresponding to the keyword included in the real-time content is displayed to the user.

It should be noted that, a piece of real-time content may be text content input by the user into the terminal at a time, or a piece of voice content input at a time, or may be text content that includes a specific number of words defined by the system.

Further, the text content input by the user into the terminal at a time may be text content input by the user before the terminal determines that the user stops text input. When the user no longer performs input within a specific time (such as 0.5 second), the system determines that the user stops inputting the text. In addition, a voice input by the user into the terminal may also be voice content input by the user before the terminal determines that the user stops voice input. The determining method of the system may be consistent with the determining method applied at the time of inputting the text.

The keywords included in the real-time content may be one or more keywords in the keywords of the reminder content included in the real-time content.

For example, when the user inputs real-time content into the terminal by using chat software or by sending a short message, after the user stops inputting, when detecting "Xiao Li" included in the real-time content, the terminal may display the reminder content "Buy and give a birthday gift to Xiao Li" stored in the terminal to the user.

In addition, the terminal may obtain text content on a webpage by intercepting display content on a webpage browser of the terminal, and parse the text content. For example, if the text content on a webpage browsed by the user and intercepted by the terminal includes a word such as "gift", the terminal obtains the keyword by parsing, and then displays the reminder content "Buy and give a birthday gift to Xiao Li" previously input by the user, on a display screen.

In the technical solution of this embodiment, the terminal extracts a keyword of reminder content input by a user into the terminal, and monitors and parses real-time content received by the terminal. If the real-time content includes the keyword, the terminal displays the reminder content that includes the keyword. When the user is uncertain about the reminding time or reminding place of specific reminder content, the terminal can determine whether to display the reminder content to the user, where the determining is performed according to whether the real-time content received by the terminal of the user includes the keyword of specific reminder content. This method can provide the user with a reminding manner that is not necessarily based on a specific reminding time or place, thereby improving user experience.

### Embodiment 2

The embodiment of the present invention provides a reminding method of a terminal. As shown in FIG. 1, the method includes:
Step S101: The terminal extracts a keyword of reminder content input by a user.

The user may input the reminder content by using an interaction platform provided by the terminal, such as a calendar or a Notepad. The terminal extracts the keyword of the reminder content input by the user.

When the terminal extracts a keyword in the reminder content, a noun in the reminder content may be extracted as the keyword first. For example, if the reminder content received at this time is "Buy and give a birthday gift to Xiao Li", the terminal may detect that nouns included in the reminder content are "Xiao Li" and "Birthday Gift". Therefore, the terminal may store "Xiao Li" and "Birthday Gift" as keywords of the reminder content. Further, optionally, the terminal may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the terminal may extract at least two keywords "Xiao Li" and "Birthday gift".

Optionally, the terminal may further remove an attribute of a compound noun. For example, the attribute of "birthday gift" is "birthday", and therefore, the terminal may remove "birthday" in "birthday gift". In this case, the keywords extracted by the terminal are at least "Xiao Li" and "gift".

Further, the keyword may further include a time or a place included in the reminder content. In this way, the terminal may comprehensively extract important information included in the user's reminder content, and use the important information as keywords. Optionally, when real-time content input by the user again includes a time or a place and the time or place included in the real-time content matches the time or place serving as a keyword, the terminal displays the reminder content that includes the time or place.

It should be noted that multiple pieces of reminder content generally coexist in the terminal, and therefore, to facilitate distinguishing of each piece of reminder content, an identifier is generally set for each piece of reminder content. Generally, the terminal may set the identifier according to the time sequence of inputting the reminder content

Step S102: The terminal monitors and parses received real-time content.

Generally, the real-time content received by the terminal includes text content and/or voice content. Specifically, the real-time content received by the terminal may be text content or voice content that is input by the user into the terminal, for example, a text input when the user uses an application that needs to invoke word input such as a short message, a Notepad, a browser, an e-mail, or an instant messenger, or a voice input when the user uses an application such as a phone, a recorder, or an instant messenger; or may be text content or voice content in parsed Internet content from a browser; or may be voice content in multimedia such as incoming calls, voices, or videos of the terminal. The real-time content may also be in another form such as image content, but the present invention is not limited thereto.

If the real-time content is text content, the text content may be parsed directly; and, if the real-time content is voice content, the voice content may be parsed directly, or the voice content is converted into text content and then the text content is parsed.

The terminal may convert the voice content into text content in the following manner:
if a pause time is greater than or equal to a preset time, converting voice content between two of the pause times into one text content sentence.

The preset time may be set by the user, or may be a default preset time of the terminal, such as 0.5 second.

Further, the terminal may parse the text content in at least the following three manners:

Manner 1 is:
dividing the text content into several groups according to the parsing step size, where the number of words included in each group of text content is less than or equal to the parsing step size, and each group of the text content is parsed to determine whether the keyword is included.

It should be noted that the parsing step size may be the maximum number of words that can be parsed each time the terminal parses the text content.

Specifically, in division, if the parsing step size stored in the terminal is 10, the terminal puts every 10 words (including punctuation marks) into one group by beginning with the first word of the text content For example, if a piece of text content includes 37 words (including punctuation marks) in total, the terminal may divide the text content into four groups, where a first group of text content includes 10 words, a second group of text content includes 10 words, a third group of text content includes 10 words, and a fourth group of text content includes 7 words. After completion of the division, the terminal parses each group of text content.

Manner 2 is:
parsing the real-time content if the number of words of the real-time content input by the user is equal to the parsing step size.

When the user inputs text content such as a short message, the user generally inputs the words into the terminal one by one. When the accumulated number of words input by the user is equal to the parsing step size, the terminal parses the real-time content.

Specifically, in a specific scenario, the parsing step size is 10 words. Therefore, when the number of words of the text content, such as the short message, input by the user reaches 10, the terminal parses the 10-word real-time content. If the user continues inputting real-time content, the parsing performed by the terminal next time begins with the eleventh word.

In addition, in the same specific scenario, if the number of words of text content input by the user at a time is less than 10, for example, when the user sends a short message that includes less than 10 words, if the terminal receives from the user an input termination instruction (for example, the user no longer continues inputting words into the terminal within a specific time (such as 0.5 second)), the terminal stops obtaining the real-time content input by the user, and begins to parse the text content shorter than the parsing step size.

Manner 3 is:
parsing the text content sentence by sentence.

In this case, the terminal divides the text content into sentences (such as sentences that can be identified by full stops, exclamation marks, question marks, and so on) or clauses (for example, the sentence is separated into multiple clauses by using commas or colons) according to punctuation marks included in the text content, such as full stops, exclamation marks, question marks, commas, and colons that can indicate pauses of the text content, and parses the sentences or clauses one by one until the end of the text content. The sentence-by-sentence parsing may be parsing each sentence or clause successively.

Step S103: If the real-time content includes the keyword, the terminal displays the reminder content that includes the keyword.

One piece of real-time content generally includes more than one keyword. When the terminal parses the real-time content, once a keyword is obtained by parsing, the terminal stores the keyword temporarily, and goes on parsing the real-time content. After the real-time content is parsed completely, the reminder content corresponding to the keyword included in the real-time content is displayed to the user.

The keywords included in the real-time content may be one or more keywords in the keywords of the reminder content included in the real-time content.

For example, when the user inputs real-time content into the terminal by using chat software or by sending a short message, the real-time content includes the extracted keyword "Xiao Li", and, when detecting "Xiao Li" included in the real-time content, the terminal may display the reminder content "Buy and give a birthday gift to Xiao Li" stored in the terminal to the user.

In addition, the terminal may obtain text content on a webpage by intercepting display content on a webpage browser of the terminal, and parse the text content. For example, if the text content on a webpage browsed by the user and intercepted by the terminal includes a word such as "gift", the terminal obtains the keyword by parsing, and then displays the reminder content "Buy and give a birthday gift to Xiao Li" previously input by the user, on a display screen.

In the technical solution of this embodiment, the terminal extracts a keyword of reminder content input by a user into the terminal, and monitors and parses received real-time content If the real-time content includes the keyword, the terminal displays the reminder content that includes the keyword. When the user is uncertain about the reminding time or reminding place of specific reminder content, the terminal can determine whether to display the reminder content to the user, where the determining is performed according to whether the real-time content received by the terminal of the user includes the keyword of specific reminder content. This method can provide the user with a reminding manner that is not necessarily based on a specific reminding time or place, thereby improving user experience.

### Embodiment 3

The embodiment of the present invention provides a terminal. As shown in FIG. 2, the terminal includes a terminal extracting unit 101 and a terminal parsing unit 102.

The terminal extracting unit 101 is configured to extract a keyword of reminder content input by a user.

The user may input the reminder content by using an interaction platform provided by the terminal, such as a calendar or a Notepad. In this case, the terminal starts the terminal extracting unit 101, and the terminal extracting unit 101 extracts the keyword of the reminder content input by the user.

When the terminal extracting unit 101 extracts a keyword in the reminder content, a noun in the reminder content may be extracted as the keyword first. For example, if the reminder content received at this time is "Buy and give a birthday gift to Xiao Li", the terminal extracting unit 101 may detect that nouns included in the reminder content are "Xiao Li" and "Birthday Gift". Therefore, the terminal extracting unit 101 may store "Xiao Li" and "Birthday Gift" as the keywords of the reminder content. Further, optionally, the terminal extracting unit 101 may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the terminal extracting unit 101 may extract at least two keywords "Xiao Li" and "Birthday gift".

Optionally, the terminal extracting unit may further remove an attribute of a compound noun. For example, the attribute of "birthday gift" is "birthday", and therefore, the terminal extracting unit may remove "birthday" in "birthday gift". In this case, the keywords extracted by the terminal extracting unit are at least "Xiao Li" and "gift".

Further, the keyword may further include a time or a place included in the reminder content. In this way, the terminal extracting unit 101 may comprehensively extract important information included in the user's reminder content, and use the important information as keywords. When real-time content input by the user again includes a time or a place and the time or place included in the real-time content matches the time or place serving as a keyword, the terminal displays the reminder content that includes the time or place.

It should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content.

The terminal parsing unit 102 is configured to monitor and parse received real-time content.

Generally, the real-time content received by the terminal includes text content and/or voice content. Specifically, the real-time content received by the terminal may be text content or voice content that is input by the user into the terminal, for example, a text input when the user uses an application that needs to invoke word input such as a short message, a Notepad, a browser, an e-mail, or an instant messenger, or a voice input when the user uses an application such as a phone, a recorder, or an instant messenger; or may be text content or voice content in parsed Internet content from a browser; or may be voice content in multimedia such as incoming calls, voices, or videos of the terminal. The real-time content may also be in another form such as image content, but the present invention is not limited thereto.

If the real-time content is text content, the terminal parsing unit 102 may directly parse the text content; and, if the real-time content is voice content, the terminal parsing unit 102 may parse the voice content directly, or may convert the voice content into text content and then parse the text content.

Therefore, further, as shown in FIG. 3, the terminal parsing unit 102 includes:
a text parsing subunit 1021, configured to parse text content if the real-time content is the text content.

Further, the text parsing subunit 1021 is specifically configured to:
divide the text content into several groups according to the parsing step size, where the number of words included in each group of text content is less than or equal to the parsing step size, and each group of the text content is parsed to determine whether the keyword is included.

It should be noted that the parsing step size may be the maximum number of words that can be parsed each time the terminal parses the text content.

Specifically, in division, if the parsing step size stored in the terminal is 10, the text parsing subunit 1021 puts every 10 words (including punctuation marks) into one group by beginning with the first word of the text content. For example, if a piece of text content includes 37 words (including punctuation marks) in total, the text parsing subunit 1021 may divide the text content into four groups, where a first group of text content includes 10 words, a second group of text content includes 10 words, a third group of text content includes 10 words, and a fourth group of text content includes 7 words. After completion of the division, the text parsing subunit 1021 parses each group of text content.

Further, the text parsing subunit 1021 may also be specifically configured to:
parse the real-time content if the number of words of the real-time content input by the user is equal to the parsing step size.

When the user inputs text content such as a short message, the user generally inputs the words into the terminal one by one. When the accumulated number of words input by the user is equal to the parsing step size, the terminal parses the real-time content.

Specifically, in a specific scenario, the parsing step size is 10 words. Therefore, when the number of words of the text content, such as the short message, input by the user reaches 10, the terminal parses the 10-word real-time content. If the user continues inputting real-time content, the parsing performed by the terminal next time begins with the eleventh word.

In addition, in the same specific scenario, if the number of words of text content input by the user at a time is less than 10, for example, when the user sends a short message that includes less than 10 words, if the terminal receives from the user an input termination instruction (for example, the user no longer continues inputting words into the terminal within a specific time (such as 1 second)), the terminal stops obtaining the real-time content input by the user, and begins to parse the text content shorter than the parsing step size.

Further, the text parsing subunit 1021 may also be specifically configured to:
parse the text content sentence by sentence.

In this case, the text parsing subunit 1021 of the terminal divides the text content into sentences (such as sentences that can be identified by full stops, exclamation marks, question marks, and so on) or clauses (for example, the sentence is separated into multiple clauses by using commas or colons) according to punctuation marks included in the text content, such as full stops, exclamation marks, question marks, commas, and colons that can indicate pauses of the text content, and parses the sentences or clauses one by one until the end of the text content. The sentence-by-sentence parsing may be parsing each sentence or clause successively.

As shown in FIG. 3, the terminal parsing unit 102 further includes:
a voice converting subunit 1022, configured to convert voice content into text content and forward the text content to the text parsing subunit 1022 if the real-time content is the voice content.

Specifically, the voice converting subunit 1022 is specifically configured to:
if a pause time is greater than or equal to a preset time, convert voice content between two of the pause times into one text content sentence.

The preset time may be set by the user, or may be a default preset time of the terminal, such as 0.5 second.

As shown in FIG. 2, the terminal further includes:
a terminal displaying unit 103, configured for the terminal to display the reminder content that includes the keyword if the real-time content includes the keyword.

One piece of real-time content generally includes more than one keyword. When the terminal parsing unit 102 parses the real-time content, once a keyword is obtained by parsing, the terminal parsing unit 102 stores the keyword temporarily, and goes on parsing the real-time content. After the real-time content is parsed completely, the reminder content corresponding to the keyword included in the real-time content is displayed to the user.

The keywords included in the real-time content may be one or more keywords in the keywords of the reminder content included in the real-time content.

For example, when the user inputs real-time content into the terminal by using chat software or by sending a short message, the real-time content includes the extracted keyword "Xiao Li", and, when detecting "Xiao Li" included in the real-time content, the terminal parsing unit 102 may send an identifier of the reminder content using "Xiao Li" as a keyword to the terminal displaying unit 103. Therefore, the terminal displaying unit 103 displays, according to the identifier, the reminder content, such as "Buy and give a birthday gift to Xiao Li", stored in the terminal to the user.

In addition, the terminal may obtain text content on a webpage by intercepting display content on a webpage browser of the terminal, and parse the text content. For example, if the text content on a webpage browsed by the user and intercepted by the terminal includes a word such as "gift", the terminal parsing unit 102 obtains the keyword by parsing, and then displays the reminder content "Buy and give a birthday gift to Xiao Li" previously input by the user, on a display screen.

In the technical solution of this embodiment, the terminal extracts a keyword of reminder content input by a user into the terminal, and monitors and parses received real-time content. If the real-time content includes the keyword, the terminal displays the reminder content that includes the keyword. When the user is uncertain about the reminding time or reminding place of specific reminder content, the terminal can determine whether to display the reminder content to the user, where the determining is performed according to whether the real-time content received by the terminal includes the keyword of specific reminder content. This method can provide the user with a reminding manner that is not necessarily based on a specific reminding time or place, thereby improving user experience.

### Embodiment 4

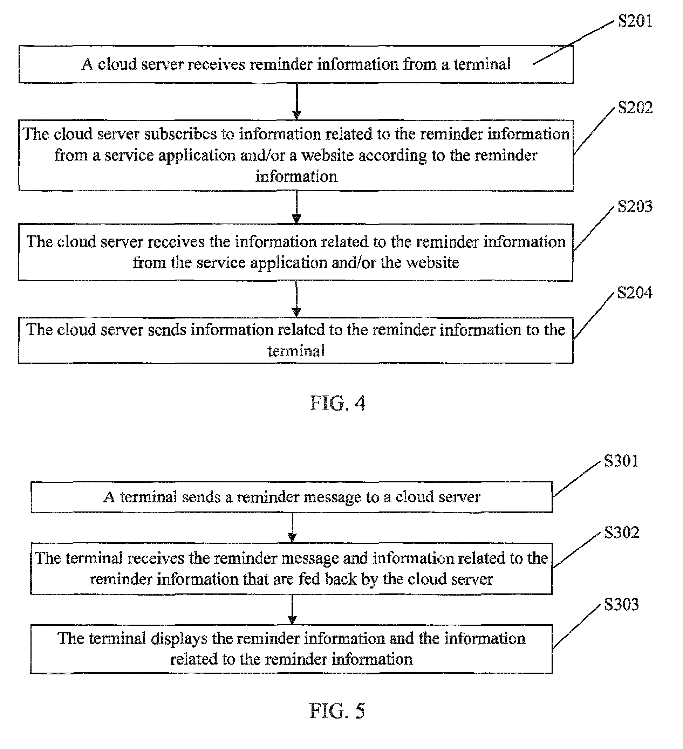

The embodiment of the present invention provides a reminding method of a cloud server. As shown in FIG. 4, the method includes:
Step S201: The cloud server receives reminder information from a terminal.

After a user inputs reminder content into the terminal, the terminal may send reminder information to the cloud server, where the reminder information at least includes the reminder content and/or a reminder content keyword extracted by the terminal. Therefore, the cloud server receives the reminder information from the terminal. If the reminder information includes the keyword, the cloud server stores the keyword directly to facilitate use of the keyword in subsequent steps; and, if the reminder information includes the reminder content of the terminal but does not include the reminder content keyword, the cloud server extracts the reminder content keyword of the terminal, and stores the keyword.

It should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content. Meanwhile, when sending the reminder content or the reminder content keyword to the cloud server, the terminal may send the identifier together to the cloud server, which makes it convenient for the cloud server to distinguish the reminder information.

When the cloud server extracts a keyword in the reminder content, a noun in the reminder content is extracted as the keyword first, and then a verb connected to the noun is obtained. For example, if the reminder content received at this time is "Buy and give a birthday gift to Xiao Li", the cloud server may detect that nouns included in the reminder content are "Xiao Li" and "Birthday Gift". Therefore, the cloud server may store "Xiao Li" and "Birthday Gift" as keywords of the reminder content. Further, the cloud server may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the cloud server extracts at least two keywords "Xiao Li" and "Birthday gift".

The cloud server may further remove an attribute of a compound noun. For example, the attribute of "birthday gift" is "birthday", and therefore, the cloud server may remove "birthday" in "birthday gift". In this case, the keywords extracted by the cloud server are at least "Xiao Li" and "gift".

Further, the keywords may be a time or a place included in the reminder content. In this way, the terminal may comprehensively extract important information included in the user's reminder content, and use the important information as keywords.

In addition, optionally, because the cloud server is in a one-to-many relationship with terminals of users, when the cloud server receives the reminder information, the cloud server may further receive at least a digital number of the terminal of the user, where the digital number is a digital number that exists uniquely and enables the cloud server to distinguish each terminal. For example, assuming that a terminal is a mobile phone, a mobile phone number of the mobile phone may be used as the digital number of the terminal, which makes it convenient for the cloud server to distinguish each terminal and makes it convenient to further serve each user.

Step S202: The cloud server subscribes to information related to the reminder information from a service application and/or a website according to the reminder information.

Specifically, the cloud server subscribes to information related to the reminder content keyword from a service application and/or a website according to the reminder content keyword in the reminder information.

According to the foregoing description, assuming that reminder content keywords in a specific piece of reminder information received by the cloud server at this time are "birthday" and "gift", the cloud server may subscribe to the information related to "birthday" and "gift" from the service application and/or website, for example, information about articles related to "birthday" and "gift" in a service application related to ordering a birthday gift or on a shopping website.

Generally, the information related to the reminder information may be updated information in the service application and/or on the website.

As shown in FIG. 4, the reminding method of a cloud server further includes:
Step S203: The cloud server receives the information related to the reminder information from the service application and/or the website.
Step S204: The cloud server feeds back the reminder information and the information related to the reminder information to the terminal.

After receiving the reminder information and the information related to the reminder information that are returned by the cloud server, the terminal displays the reminder content corresponding to the reminder information to the user, and displays the information related to the reminder information to the user.

It should be noted that, after subscribing to the information related to the reminder information from the service application and/or the website according to the reminder information, the cloud server may further establish and store a subscription relationship between the reminder information and the service application and/or website. Therefore, when any information is sent from the service application and/or website related to specific reminder information to the cloud server, the cloud server can send the received information related to the reminder information and the reminder information rapidly and accurately to the terminal that sends the reminder information.

Further, optionally, when the user deletes the reminder content stored in the terminal, the terminal may send a message to the cloud server to notify the operation of the user to the cloud server, and therefore, the cloud server may delete the reminder content and/or the keyword of the reminder content stored in the cloud server, and cancel a subscription request related to the reminder, that is, send a subscription cancellation request to the service application server and/or website that is related to the reminder and with which the subscription relationship exists.

In the technical solution of this embodiment, after the cloud server receives reminder information sent by the terminal, the cloud server searches for a service application and/or a website according to the reminder information, and subscribes to information of the service application and/or website. After the cloud server receives information related to the reminder information from the service application and/or the website, the cloud server sends the reminder information and the information related to the reminder information to the terminal, and the terminal displays the information related to the reminder information and the reminder content corresponding to the reminder content to the user. The reminding method of a cloud server can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### Embodiment 5

The embodiment of the present invention provides a reminding method of a cloud server. As shown in FIG. 4, the method includes:
Step S201: The cloud server receives reminder information from a terminal.

After a user inputs reminder content into the terminal, the terminal may send reminder information to the cloud server, where the reminder information at least includes the reminder content and/or a reminder content keyword extracted by the terminal. Therefore, the cloud server receives the reminder information from the terminal. If the reminder information includes the keyword, the cloud server stores the keyword directly to facilitate use of the keyword in subsequent steps; and, if the reminder information includes the reminder content of the terminal but does not include the reminder content keyword, the cloud server extracts the reminder content keyword of the terminal, and stores the keyword.

It should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content. Meanwhile, when sending the reminder content or the reminder content keyword to the cloud server, the terminal may send the identifier together to the cloud server, which makes it convenient for the cloud server to distinguish the reminder information.

When the cloud server extracts a keyword in the reminder content, a noun in the reminder content is extracted as the keyword first, and then a verb connected to the noun is obtained. For example, if the reminder content received at this time is "Buy and give a birthday gift to Xiao Li", the cloud server may detect that nouns included in the reminder content are "Xiao Li" and "Birthday Gift". Therefore, the cloud server may store "Xiao Li" and "Birthday Gift" as keywords of the reminder content. Further, the cloud server may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the cloud server extracts at least two keywords "Xiao Li" and "Birthday gift".

The cloud server may further remove an attribute of a compound noun. For example, the attribute of "birthday gift" is "birthday", and therefore, the cloud server may remove "birthday" in "birthday gift". In this case, the keywords extracted by the cloud server are at least "Xiao Li" and "gift".

Further, the keywords may be a time or a place included in the reminder content. In this way, the terminal may comprehensively extract important information included in the user's reminder content, and use the important information as keywords.

In addition, optionally, because the cloud server is in a one-to-many relationship with terminals of users, when the cloud server receives the reminder information, the cloud server may further receive at least a digital number of the terminal of the user, where the digital number is a digital number that exists uniquely and enables the cloud server to distinguish each terminal. For example, assuming that a terminal is a mobile phone, a mobile phone number of the mobile phone may be used as the digital number of the terminal, which makes it convenient for the cloud server to distinguish each terminal and makes it convenient to further serve each user.

Step S202: The cloud server subscribes to information related to the reminder information from a service application and/or a website according to the reminder information.

Specifically, the cloud server subscribes to information related to the reminder content keyword from a service application and/or a website according to the reminder content keyword in the reminder information.

According to the foregoing description, assuming that reminder content keywords in a specific piece of reminder information received by the cloud server at this time are "birthday" and "gift", the cloud server may subscribe to the information related to "birthday" and "gift" from the service application and/or website, for example, information about articles related to "birthday" and "gift" in a service application related to ordering a birthday gift or on a shopping website.

Generally, the information related to the reminder information may be updated information in the service application and/or on the website.

Further, the cloud server searches for a service application and/or a website according to the keyword of the reminder content in the reminder information, and subscribes to the information related to the keyword of the reminder content in the reminder information from the service application and/or the website.

Specifically, the cloud server may search for the service application and/or the website according to the keyword of the reminder content in the reminder information by using at least the following two methods:

Method 1 is:
searching, by the cloud server, for a list of pre-configured service applications and/or websites according to the keyword of the reminder content in the reminder information.

Specifically, the list of the pre-configured service applications and/or websites is a list that is pre-configured for the user and stored in the cloud server.

In addition, generally, before providing the user with a service based on the cloud server, the operator of the cloud server presets some service applications and/or websites in the cloud server, without requiring the user to perform manual configurations, which makes it convenient for the user to directly run and access the service applications and/or websites that are preset in the cloud server.

Method 2 is:
searching, by the cloud server, for a service application and/or website on the Internet according to the keyword of the reminder content in the reminder information.

If no service application and/or website is preset in the cloud server or if the preset service application and/or website does not meet search requirements, the cloud server may search for a service application and/or website on the Internet according to the keyword of the reminder content in the reminder information.

The cloud server may first search for the service application and/or website preset by the user. If the service application and/or website preset by the user does not match the keyword, a service application and/or website preset by a server vendor in the cloud server may be searched for. If neither the service application and/or website preset by the user nor the service application and/or website preset by the operator in the cloud server matches the keyword, the cloud server may search the Internet.

Optionally, if no service application and/or website that matches the keyword obtained from specific reminder information of the user can be found no matter which search method is used, the cloud server may return prompt information to the terminal of the user, where the prompt information indicates to the user that a cloud server reminding function provided for the reminder information cannot be completed.

If the cloud server can find a service application and/or website matching the keyword obtained from the reminder information of the user, the cloud server may send a subscription request to the service application and/or the website to establish a subscription relationship with the service application and/or the website.

As shown in FIG. 4, the reminding method of a cloud server further includes:
Step S203: The cloud server receives the information related to the reminder information from the service application and/or the website.
Step S204: The cloud server feeds back the reminder information and the information related to the reminder information to the terminal.

After receiving the reminder information and the information related to the reminder information that are returned by the cloud server, the terminal displays the reminder content corresponding to the reminder information to the user, and displays the information related to the reminder information to the user.

It should be noted that, after subscribing to the information related to the reminder information from the service application and/or the website according to the reminder information, the cloud server may establish and store a subscription relationship between the reminder information and the service application and/or website. Therefore, when any information is sent from the service application and/or website related to specific reminder information to the cloud server, the cloud server can send the received information related to the reminder information and the reminder information rapidly and accurately to the terminal that sends the reminder information.

Further, optionally, when the user deletes the reminder content stored in the terminal, the terminal may send a message to the cloud server to notify the operation of the user to the cloud server, and therefore, the cloud server may delete the reminder content and/or the keyword of the reminder content stored in the cloud server, and cancel a subscription request related to the reminder, that is, send a subscription cancellation request to the service application server and/or website that is related to the reminder and with which the subscription relationship exists.

In the technical solution of this embodiment, after the cloud server receives reminder information sent by the terminal, the cloud server searches for a service application and/or a website according to the reminder information, and subscribes to information of the service application and/or website. After the cloud server receives information related to the reminder information from the service application and/or the website, the cloud server sends the reminder information and the information related to the reminder information to the terminal, and the terminal displays the information related to the reminder information and the reminder content corresponding to the reminder content to the user. The reminding method of a cloud server can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### Embodiment 6

The embodiment of the present invention provides a reminding method of a terminal. As shown in FIG. 5, the method includes:
Step S301: The terminal sends a reminder message to a cloud server.

The terminal sends a reminder message to the cloud server, where the reminder information at least includes reminder content and/or a keyword of the reminder content.

In addition, it should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content. Meanwhile, when sending the reminder content or the reminder content keyword to the cloud server, the terminal may send the identifier together to the cloud server, which makes it convenient for the cloud server to distinguish the reminder information.

Step S302: The terminal receives the reminder message and information related to the reminder information that are fed back by the cloud server.

Step S303: The terminal displays the reminder information and the information related to the reminder information.

After receiving the reminder information and the information related to the reminder information that are returned by the cloud server, the terminal displays the reminder content corresponding to the reminder information to the user, and displays the information related to the reminder information to the user.

Specifically, if the reminder information includes the reminder content, the terminal displays the reminder content and the information related to the reminder information;
or
if the reminder information includes the keyword of the reminder content, the terminal obtains the reminder content corresponding to the keyword of the reminder content, and displays the reminder content and the information related to the reminder information.

The user may perform corresponding operations according to information displayed by the terminal and related to the reminder information. For example, if the reminder content input by the user is "Buy and give a birthday gift to Xiao Li", the information received from the cloud server, related to the reminder content, and displayed by the terminal may include information such as links and data of a best-selling birthday gift on a shopping website, and the user may view the birthday gift and choose whether to buy it, thereby storing the user's time of selecting the birthday gift on the Internet and facilitating use for the user while reminding the user.

In the technical solution of the embodiment of the present invention, the terminal sends reminder information to the cloud server, and receives and displays the reminder information and information related to the reminder information that are returned by the cloud server. The reminding method of a terminal can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### Embodiment 7

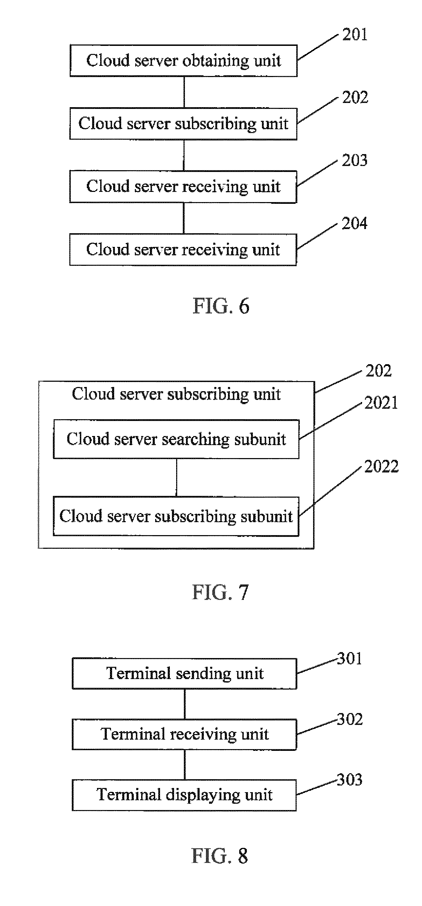

The embodiment of the present invention provides a cloud server. As shown in FIG. 6, the cloud server includes a cloud server obtaining unit 201 and a cloud server subscribing unit 202.

The cloud server obtaining unit 201 is configured to receive reminder information from a terminal.

After a user inputs reminder content into the terminal, the terminal may send reminder information to the cloud server, where the reminder information at least includes the reminder content and/or a reminder content keyword extracted by the terminal. Therefore, the cloud server obtaining unit 201 receives the reminder information from the terminal. If the reminder information includes the keyword, the cloud server obtaining unit 201 stores the keyword directly to facilitate use of the keyword in subsequent steps; and, if the reminder information includes the reminder content of the terminal but does not include the reminder content keyword, the cloud server obtaining unit 201 extracts the reminder content keyword of the terminal, and stores the keyword.

It should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content. Meanwhile, when sending the reminder content or the reminder content keyword to the cloud server, the terminal may send the identifier together to the cloud server, which makes it convenient for the cloud server to distinguish the reminder information.

When the cloud server obtaining unit 201 extracts a keyword in the reminder content, a noun in the reminder content is extracted as the keyword first, and then a verb connected to the noun is obtained. For example, if the reminder content received at this time is "Buy and give a birthday gift to Xiao Li", the cloud server obtaining unit 201 may detect that nouns included in the reminder content are "Xiao Li" and "Birthday Gift". Therefore, the cloud server obtaining unit 201 may store "Xiao Li" and "Birthday Gift" as keywords of the reminder content. Further, the cloud server obtaining unit 201 may extract a verb "give" connected to the noun "Xiao Li" and a verb "buy" connected to the noun "birthday gift", and store the verbs as keywords of the reminder content.

By means of the foregoing operations, for the reminder content "Buy and give a birthday gift to Xiao Li" input by the user, the cloud server obtaining unit 201 extracts at least two keywords "Xiao Li" and "Birthday gift".

The cloud server obtaining unit 201 may further remove an attribute of a compound noun. For example, the attribute of "birthday gift" is "birthday", and therefore, the cloud server obtaining unit 201 may remove "birthday" in "birthday gift". In this case, the keywords extracted by the cloud server obtaining unit 201 are at least "Xiao Li" and "gift".

Further, the keywords may be a time or a place included in the reminder content. In this way, the terminal may comprehensively extract important information included in the user's reminder content, and use the important information as keywords.

In addition, optionally, because the cloud server obtaining unit 201 is in a one-to-many relationship with terminals of users, when receiving the reminder information, the cloud server obtaining unit 201 may further receive at least a digital number of the terminal of the user, where the digital number is a digital number that exists uniquely and enables the cloud server to distinguish each terminal. For example, assuming that a terminal is a mobile phone, a mobile phone number of the mobile phone may be used as the digital number of the terminal, which makes it convenient for the cloud server to distinguish each terminal and makes it convenient to further serve each user.

The cloud server subscribing unit 202 is configured to subscribe to information related to the reminder information from a service application and/or a website according to the reminder information.

Specifically, the cloud server subscribing unit 202 subscribes to information related to the reminder content keyword from a service application and/or a website according to the reminder content keyword in the reminder information.

According to the foregoing description, assuming that reminder content keywords in a specific piece of reminder information received by the cloud server obtaining unit 201 at this time are "birthday" and "gift", the cloud server subscribing unit 202 may subscribe to the information related to "birthday" and "gift" from the service application and/or website, for example, information about articles related to "birthday" and "gift" in a service application related to ordering a birthday gift or on a shopping website.

Further, as shown in FIG. 7, the cloud server subscribing unit 202 includes:
a cloud server searching subunit 2021, configured to search for a service application and/or a website according to the keyword of the reminder content in the reminder information; and
a cloud server subscribing subunit 2022, configured to subscribe to information related to the keyword of the reminder content in the reminder information from the service application and/or the website.

Specifically, the cloud server searching subunit 2021 may use at least the following two search methods:

Method 1 is:
searching, by the cloud server searching subunit 2021, for a list of pre-configured service applications and/or websites according to the keyword of the reminder content in the reminder information.

Specifically, the list of the pre-configured service applications and/or websites is a list that is pre-configured for the user and stored in the cloud server.

In addition, generally, before providing the user with a service based on the cloud server, the operator of the cloud server presets some service applications and/or websites in the cloud server, without requiring the user to perform manual configurations, which makes it convenient for the user to directly run and access the service applications and/or websites that are preset in the cloud server.

Method 2 is:
searching, by the cloud server searching subunit 2022, for a service application and/or website on the Internet according to the keyword of the reminder content in the reminder information.

If no service application and/or website is preset in the cloud server or if the preset service application and/or website does not meet search requirements, the cloud server searching subunit 2021 may search for a service application and/or website on the Internet according to the keyword of the reminder content in the reminder information.

The cloud server searching subunit 2021 may first search for the service application and/or website preset by the user. If the service application and/or website preset by the user does not match the keyword, a service application and/or website preset by the operator in the cloud server may be for. If neither the service application and/or website preset by the user nor the service application and/or website preset by the operator in the cloud server matches the keyword, the cloud server searching subunit 2021 may search the Internet.

Optionally, if no service application and/or website that matches the keyword obtained from specific reminder information of the user can be found no matter which search method is used, the cloud server may return prompt information to the terminal of the user, where the prompt information indicates to the user that a cloud server reminding function provided for the reminder information cannot be completed.

If the cloud server searching subunit 2021 can find a service application and/or website matching the keyword obtained from the reminder information of the user, the cloud server searching subunit may instruct the cloud server subscribing subunit 2022 to send a subscription request to the service application and/or the website to establish a subscription relationship with the service application and/or the website.

Further, as shown in FIG. 6, the cloud server further includes:
a cloud server receiving unit 203, configured to receive the information related to the reminder information from the service application and/or the website; and
a cloud server sending unit 204, configured to send the information related to the reminder information to the terminal.

The information from the service application and/or the website passes through the cloud server and finally arrives at the terminal. After receiving the identifier and/or the reminder content corresponding to the identifier returned by the cloud server sending unit 204, the terminal displays the reminder content corresponding to the identifier to the user.

It should be noted that, after subscribing to the information related to the reminder information from the service application and/or the website according to the reminder information, the cloud server may establish and store a subscription relationship between the reminder information and the service application and/or website. Therefore, when any information is sent from the service application and/or website related to specific reminder information to the cloud server, the cloud server sending unit 204 can send the received information related to the reminder information and the reminder information rapidly and accurately to the terminal that sends the reminder information.

Further, optionally, when the user deletes the reminder content stored in the terminal, the terminal may send a message to the cloud server to notify the operation of the user to the cloud server, and therefore, the cloud server may delete the reminder content and/or the keyword of the reminder content stored in the cloud server, and cancel a subscription request related to the reminder, that is, send a subscription cancellation request to the service application server and/or website that is related to the reminder and with which the subscription relationship exists.

In the technical solution of this embodiment, after the cloud server receives reminder information sent by the terminal, the cloud server searches for a service application and/or a website according to the reminder information, and subscribes to information of the service application and/or website. After the cloud server receives information related to the reminder information from the service application and/or the website, the cloud server sends the reminder information and the information related to the reminder information to the terminal, and the terminal displays the information related to the reminder information and the reminder content corresponding to the reminder content to the user. The reminding method of a cloud server can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### Embodiment 8

The embodiment of the present invention provides a terminal. As shown in FIG. 8, the terminal includes a terminal sending unit 301, a terminal receiving 302, and a terminal displaying unit 303.

The terminal sending unit 301 is configured to send a reminder message to a cloud server.

The terminal sending unit 301 sends a reminder message to the cloud server, where the reminder information at least includes reminder content and/or a keyword of the reminder content.

In addition, it should be noted that multiple pieces of reminder content generally coexist in the terminal, and therefore, to facilitate distinguishing of each piece of reminder content, an identifier that uniquely exists in the terminal is generally set for each piece of reminder content. Generally, the terminal may set the identifier according to the time sequence of inputting the reminder content. Meanwhile, when sending the reminder content or the reminder content keyword to the cloud server, the terminal sending unit 301 may send the identifier together to the cloud server, which makes it convenient for the cloud server to distinguish the reminder information.

The terminal receiving unit 302 is configured to receive information related to the reminder information that is fed back by the cloud server.

The terminal displaying unit 303 is configured to display the information and the reminder information.

After the terminal receiving unit 302 receives the reminder information and the information related to the reminder information that are returned by the cloud server, the reminder content corresponding to the reminder information is displayed to the user, and the information related to the reminder information is displayed to the user.

Specifically, if the reminder information includes the reminder content, the terminal displaying unit 303 displays the reminder content and the information related to the reminder information;
or
if the reminder information includes the keyword of the reminder content, the terminal displaying unit 303 obtains the reminder content corresponding to the keyword of the reminder content, and displays the reminder content and the information related to the reminder information.

The user may perform corresponding operations according to information displayed by the terminal displaying unit 303 and related to the reminder information. For example, if the reminder content input by the user is "Buy and give a birthday gift to Xiao Li", the information received from the cloud server, related to the reminder content, and displayed by the terminal displaying unit 303 may include information such as links and data of a best-selling birthday gift on a shopping website, and the user may view the birthday gift and choose whether to buy it, thereby storing the user's time of selecting the birthday gift on the Internet and facilitating use for the user while reminding the user.

In the technical solution of the embodiment of the present invention, the terminal sends reminder information to the cloud server, and receives and displays the reminder information and information related to the reminder information that are returned by the cloud server. The reminding method of a terminal can provide the user with a corresponding reminding service when the user is uncertain about the reminding time or reminding place of specific reminder content, and can provide the user with some information related to the reminder content, so that the user can directly obtain information content of interest and can conveniently perform operations related to the reminder content. This method can provide the user with a reminding manner that is not necessarily based on a specific reminding time or place, thereby improving user experience.

### Embodiment 9

The embodiment of the present invention provides a reminding system, where the reminding system includes a cloud server in Embodiment 8 and a terminal in Embodiment 9.

According to the description of the foregoing embodiments, a person skilled in the art can clearly understand that the present invention may be implemented by software in addition to necessary universal hardware or by hardware only. In most circumstances, the former is preferred. Based on such an understanding, the technical solutions of the present invention in essence or the part contributing to the prior art may be implemented in the form of a software product. The computer software product may be stored in a readable storage medium, for example, a floppy disk, a hard disk, or an optical disc in a computer, and may include several instructions used for instructing a computer device (which may be a personal computer, a server, or a network device or the like) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A reminding method of a terminal, comprising:
extracting, by the terminal, a keyword of reminder content input by a user;
monitoring and parsing, by the terminal, received real-time content; and
if the real-time content comprises the keyword, displaying, by the terminal, the reminder content that comprises the keyword.

2. The reminding method of a terminal according to claim 1, wherein the received real-time content comprises:
text content and/or voice content.

3. The reminding method of a terminal according to claim 2, wherein, if the received real-time content is voice content, the parsing received real-time content comprises:
if a pause time is greater than or equal to a preset time, converting voice content between two of the pause times into one text content sentence.

4. A terminal, comprising:
a terminal extracting unit, configured to extract a keyword of reminder content input by a user;
a terminal parsing unit, configured to monitor and parse received real-time content; and
a terminal displaying unit, configured for the terminal to display the reminder content that comprises the keyword if the real-time content comprises the keyword.

5. The terminal according to claim 4, wherein the terminal parsing unit comprises:
a text parsing subunit, configured to parse text content if the real-time content is the text content.

6. The terminal according to claim 5, wherein the terminal parsing unit further comprises:
a voice converting subunit, configured to convert voice content into text content and forward the text content to the text parsing subunit if the real-time content is the voice content.

7. A reminding method of a cloud server, comprising:
receiving, by the cloud server, reminder information from a terminal;
subscribing, by the cloud server, to information related to the reminder information from a service application and/or a website according to the reminder information;
receiving, by the cloud server, the information related to the reminder information from the service application and/or the website; and
feeding back, by the cloud server, the reminder information and the information related to the reminder information to the terminal.

8. The reminding method of a cloud server according to claim 7, wherein:
the reminder information at least comprises reminder content and/or a keyword of the reminder content.

9. The reminding method of a cloud server according to claim 8, wherein, if the reminder information comprises the reminder content, the method further comprises:
extracting, by the cloud server, the keyword of the reminder content out of the reminder information after receiving the reminder information from the terminal.

10. The reminding method of a cloud server according to claim 9, wherein, the subscribing, by the cloud server, to information related to the reminder information from a service application and/or a website according to the reminder information, comprises:
searching, by the cloud server, for a service application and/or a website according to the keyword of the reminder content in the reminder information, and subscribing to information related to the keyword of the reminder content in the reminder information from the service application and/or the website.

11. The reminding method of a cloud server according to claim 10, wherein, the searching, by the cloud server, for a service application and/or a website according to the keyword of the reminder content in the reminder information, comprises:
searching, by the cloud server, for a pre-configured service application and/or website according to the keyword of the reminder content in the reminder information;
or
searching for a service application and/or a website on the Internet.

12. A reminding method of a terminal, comprising:
sending, by the terminal, reminder information to a cloud server;
receiving, by the terminal, the reminder information and information related to the reminder information that are fed back by the cloud server; and
displaying, by the terminal, the reminder information and the information related to the reminder information.

13. The reminding method of a terminal according to claim 12, wherein:
the reminder information at least comprises reminder content and/or a keyword of the reminder content.

14. The reminding method of a terminal according to claim 13, wherein the displaying, by the terminal, the reminder information and the information related to the reminder information, comprises:
if the reminder information comprises the reminder content, displaying, by the terminal, the reminder content and the information related to the reminder information;
or
if the reminder information comprises the keyword of the reminder content, obtaining, by the terminal, the reminder content corresponding to the keyword of the reminder content, and displaying the reminder content and the information related to the reminder information.

15. A cloud server, comprising:
a cloud server obtaining unit, configured to receive reminder information from a terminal;
a cloud server subscribing unit, configured to subscribe to information related to the reminder information from a service application and/or a website according to the reminder information;
a cloud server receiving unit, configured to receive the information related to the reminder information from the service application and/or the website; and
a cloud server sending unit, configured to send the information related to the reminder information to the terminal.

16. The cloud server according to claim 15, wherein:
the reminder information at least comprises reminder content and/or a keyword of the reminder content.

17. The cloud server according to claim 16, wherein the cloud server obtaining unit is further configured to extract the keyword of the reminder content in the reminder information if the reminder information comprises the reminder content.

18. The cloud server according to claim 15 or 16, wherein the cloud server subscribing unit comprises:
a cloud server searching subunit, configured to search for a service application and/or a website according to the keyword of the reminder content in the reminder information; and
a cloud server subscribing subunit, configured to subscribe to information related to the keyword of the reminder content in the reminder information from the service application and/or the website.

19. The cloud server according to claim 15 or 16, wherein the cloud server searching subunit is specifically configured to:
search for a pre-configured service application and/or website according to the keyword of the reminder content in the reminder information;
or
search for a service application and/or a website on the Internet.

20. A terminal, comprising:
a terminal sending unit, configured to send reminder information to a cloud server;
a terminal receiving unit, configured to receive the reminder information and information related to the reminder information that are fed back by the cloud server; and
a terminal displaying unit, configured to display the reminder information and the information related to the reminder information.

21. The terminal according to claim 20, wherein,
the reminder information at least comprises reminder content and/or a keyword of the reminder content.

22. The reminding method of a terminal according to claim 21, wherein the terminal displaying unit is specifically configured to:
if the reminder information comprises the reminder content, display the reminder content and the information related to the reminder information;
or
if the reminder information comprises the keyword of the reminder content, obtain the reminder content corresponding to the keyword of the reminder content, and display the reminder content and the information related to the reminder information.

23. A reminding system, wherein the reminding system comprises the cloud server according to any one of claims 15 to 19 and the terminal according to any one of claims 20 to 22.
